# EUROPEAN PATENT SPECIFICATION

(11) **EP 2 108 551 B1**
(45) Date of publication and mention of the grant of the patent: **27.06.2012**
(21) Application number: 08006952.9
(22) Date of filing: 08.04.2008
(51) Int. Cl.: B60R 22/18

(54) **Belt system**
Gurtsystem
Système de courroie

(43) Date of publication of application: 14.10.2009
(73) Proprietor: GM Global Technology Operations LLC, Detroit, MI 48265-3000 (US)
(72) Inventor: Fredriksson, Roger, 46158 Trollhättan (SE)
(74) Representative: Strauss, Peter

(56) References cited:
- EP-A- 0 561 274
- DE-A1- 3 103 114
- DE-A1-102006 052 093
- DE-A1-102007 046 961
- GB-A- 2 019 711
- US-A- 5 732 974
- ANONYMOUS: "Guide loop with a comfort feature" RESEARCH DISCLOSURE, MASON PUBLICATIONS, HAMPSHIRE, GB, vol. 347, no. 43, 1 March 1993 (1993-03-01), XP007118818 ISSN: 0374-4353

## Description

The invention relates to a seat belt restraint system of a motor vehicle, with a belt and a guiding device, especially a D-loop, comprising a first longitudinal recess for guiding and/or redirecting the belt, means for fixing the guiding device to the frame of the motor vehicle and a permanent or plastic deformable part, which allows a longitudinal movement of the guiding device relative to the frame, if the tensile forces in the belt are greater than a defined threshold.

Seat belt restraint systems are used in motor vehicles in order to reduce the risk of injuries of the vehicle occupants in the case of an accident. Two and three point restraint systems contain a lap and/or shoulder belt. The belt or respectively the webbing is rolled in a retractor spool and normally the belt is fixed to the seat with the help of a buckle assembly. Furthermore, the belt is redirected with the help of a guiding device, e. g. a D-loop, which is fixed to the frame, especially the B-pillar, of the motor vehicle. The guiding device is fixed to the B-pillar with help of bolt, whereby the D-loop is rotatable around the axis of the bolt. The guiding device contains a longitudinal recess for guiding the belt. In the case of an accident, when high tensile forces occur in the belt, the so called webbing dumping is possible. Dumping is the packaging of the belt or webbing in one of the corners or the ends of the longitudinal recess. As shorter as the distance between the longitudinal recess and the bolt is, as more likely is that webbing dumping occurs. The distance between the bolt and the longitudinal recess for guiding the belt is small, because the bigger this distance is, the higher the bolt has to be fixed to the B-pillar. It is more difficult to fix the bolt in a higher vertical position to the B-pillar than in lower vertical position.

The patent application GB 2 019 711 A discloses a motor vehicle seat belt restraint system with a belt and a guiding device. The guiding device has a first longitudinal recess for guiding the belt. The guiding device is fixed to the frame of the motor vehicle with the help of a bolt, which is secured to the guiding device in a second recess. A permanent or plastic deformation of the guiding device is serving to demonstrate that the belt war being worn when an accident took place. Therefore, the maximum longitudinal movement of the guiding device is very short and webbing dumping cannot be reduced in an appropriate manner.

The EP 0 561 274 A1 discloses a seat belt assembly, comprising a first and second mounting bracket, a first and second belt connector, a first/second connecting member connectable with said first/second belt connector and a first and second connecting means and a first/second biasing means for biasing said first/second member in the first/third position.

The US 5 732 974, which describes a system according to the preamble of claim 1, discloses a vehicle occupant safety apparatus comprising a seat belt, an energy absorber connected with the seat belt, a D-ring having a webbing opening through which the seat belt extends, means for supporting the D-ring for movement from a first position to a second position upon actuation of the energy absorber and signaling means actuable in response to movement of the D-ring form the first position to the second position for providing a signal perceptible to the vehicle occupant and indicative of actuation of said energy absorber.

The anonymous publication "guide loop with comfort feature", mason publications, Hampshire, GB, March 1, 1993, discloses a guideloop with a comfort feature that reduces shoulder belt forces.

The DE 31 03 114 A1 discloses a D-loop for a seat belt restraint system with a recess for guiding and redirecting a belt and a recess for fixing a bolt.

The invention aims to provide a seat belt restraint system and a motor vehicle in which webbing dumping in guiding devices does not occur.

The aim is solved with a seat belt restraint system of a motor vehicle according to claim 1. The seat belt restraint system of the motor vehicle has a belt and a guiding device, especially a D-loop, comprising a first longitudinal recess for guiding and/or redirecting the belt, means for fixing the guiding device to the frame of the motor vehicle and a, preferably permanent or plastic, deformable part, which allows a longitudinal movement of the guiding device relative to the frame, if the tensile forces in the belt are greater than a defined threshold, whereby the maximum longitudinal movement of the guiding device is greater than 1 cm. The distance of 1 cm is enough, to reduce the risk of belt or webbing dumping in a remarkable quantity. The first recess is not for fixing the end of the belt. The guiding device comprises a third recess, especially in the form of an elongated hole, which allows the longitudinal movement of the guiding device. The deformable part is the part of the guiding device, which forms the boundaries of the third recess. In the proximity of the third recess at least one further recess, especially in the form of an elongated hole, is located in the guiding device in order to create the boundaries of the third recess higher deformable.

In a further embodiment the maximum longitudinal movement is greater than 2 cm.

In an additional embodiment the means for fixing the guiding device to the frame of the motor vehicle comprise a second recess in the guiding device for fixing a bolt and a bolt, which is fixed in the second recess and to the frame.

Preferably the guiding device is rotatable around the center of the bolt, when the guiding device is in a normal used position.

In a further embodiment the maximum longitudinal movement is greater than the diameter of the bolt.

The guiding device comprises a third recess, especially in the form of an elongated hole, which allows the longitudinal movement of the guiding device.

In an additional embodiment the bolt is longitudinally moveable in the third recess.

In a further embodiment the second and third recesses are formed as one recess.

In an additional embodiment the breadth of the third recess is smaller than the diameter of the bolt. As a consequence, the bolt has to deform the third recess for moving in the third recess.

The deformable part is the part of the guiding device, which forms the boundaries of the third recess. The boundaries of the third recess have to be deformed for the moving of the bolt in the third recess.

In the proximity of the third recess at least one further recess, especially in the form of an elongated hole, is located in the guiding device in order to create the boundaries of the third recess higher deformable. The at least one further recess gives deforming space for the boundaries of the third recess.

Especially between the third recess and the at least one further recess at least one deformable strap is formed. The strap is the main deformable part of the guiding device.

In a further embodiment the guiding device, especially the deformable part, e. g. the at least one strap, is made of metal, especially iron, aluminum or alloys of iron or aluminum and/or plastic.

A motor vehicle comprises a above described seat belt restraint system.

One example of the invention will be described with reference to the accompanying drawings, in which:
Fig. 1 gives a front view of a guiding device with a bolt in a first, normal used position,
Fig. 2 gives a front view of the guiding device according to Fig. 1 with the bolt in a second position,
Fig. 3 gives a front view of the guiding device according to Fig. 1 with the bolt in a third position and
Fig. 4 gives a longitudinal view according to line A-A in Fig. 1

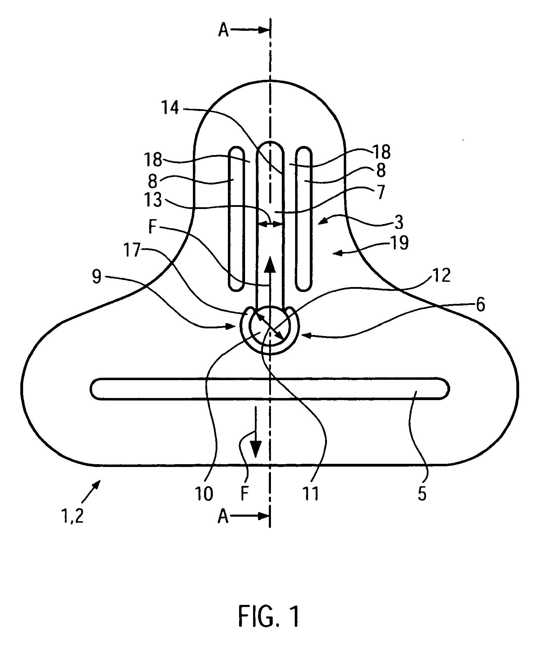

Fig. 1 shows a front view of the guiding device 1 or respectively a D-loop 2 for guiding and/or redirecting a belt 4 of a seat belt restraint system of a motor vehicle.

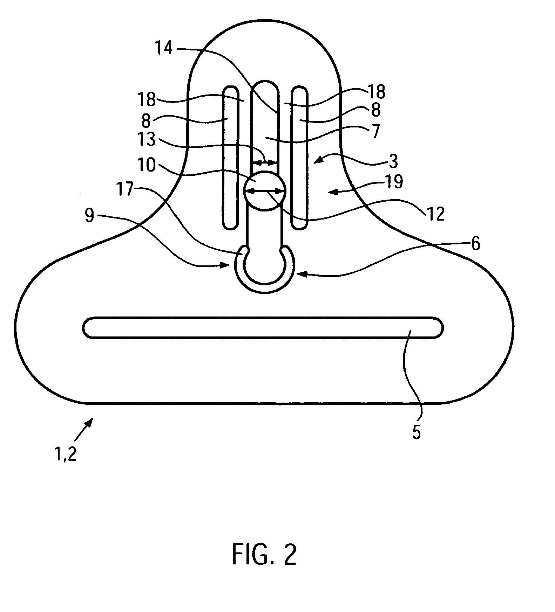

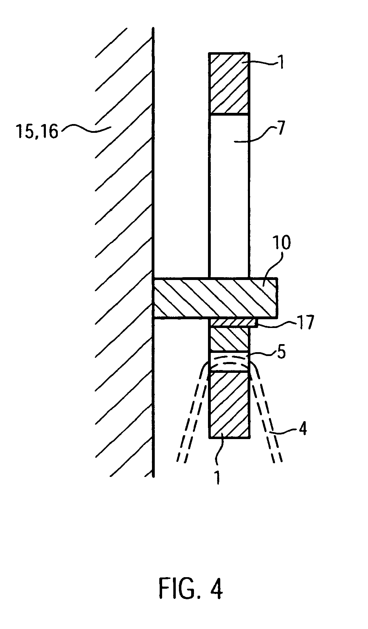

The guiding device 1 is fixed to a frame 15 or a B-pillar 16 of the motor vehicle with the help of a bolt 10 (Fig. 4). The belt 4 is rolled in a retractor spool on the bottom of the motor vehicle (not disclosed in Fig. 1 to 4). The belt 4 extends from the retractor spool to the guiding device 1 and is redirected by the guiding device 1 to a shoulder and/or a chest of a vehicle occupant, if the seat belt restraint system is in use. The guiding device 1 can also be adjusted in a vertical way in order to adapt the belt 4 to different sizes of the body of a vehicle occupant (not disclosed in Fig. 1 to 4).

The guiding device 1 has a first longitudinal recess 5 for guiding and/or redirecting the belt 4 (Fig. 1 to 4). The belt 4 is only shown in Fig. 4 in a dashed line. In a second, partially circular recess 6 the bolt 10 is fixed to the guiding device (Fig. 1). The second recess 6 and the bolt 10 are means 9 for fixing the guiding device 1. The guiding device 1 is rotatable around the center 11 of the bolt 10. The second recess 6 is formed by a bushing 17 made of plastic, which can reduce the friction and the noise, when the bolt 10 rotates in the second recess 6 (Fig. 1). A third recess 7 in form of an elongated hole has a breadth 13, which is smaller than the diameter 12 of the bolt 10. As a consequence, the bolt 10 cannot move into the third recess 7, when the guiding device 1 is normally used, i. e. if the belt 1 is tensioned only with small tensile forces. The second and third recesses 6, 7 form one recess. In the proximity and parallel to the third recess 7 on each side one further recess 8 in the form of an elongated hole exists. Therefore, between the third recess 7 and the two further recesses 8 two straps 18 are formed. These straps 18 are made of a plastically-deformable material, especially metal, e. g. aluminum. The straps 18 are the essential part of a deformable part 19 of the guiding device 1 (Fig. 1 to 3).

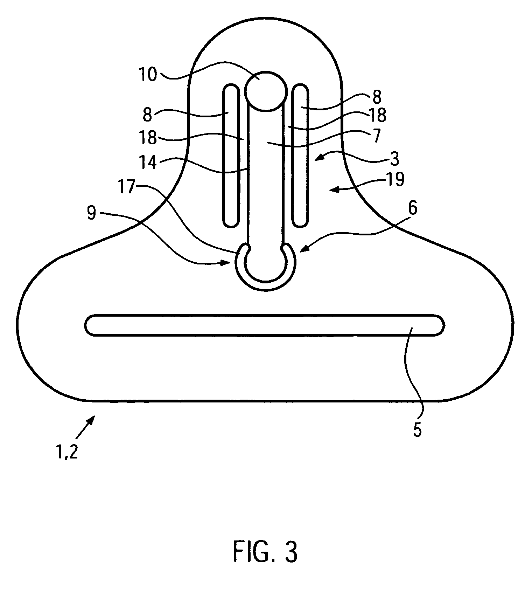

The braking force for the occupant is the product of the mass of the body of the vehicle occupant and of the braking deceleration. The belt 4 has to receive the braking force. In the case of an accident high tensile forces take effect in the belt 4. These tensile forces react in the guiding device 1, because the guiding device 1 can rotate around the center 11 of the bolt 10, as forces which are directed parallel to the longitudinal extension of the third recess 7. These forces are shown in Fig. 1 in two arrows F. As there occur in the belt 4 in crashes high tensile forces, the force F is high enough to deform the straps 18, i. e. to widen third recess 7, and the bolt 10 can slide a distance of about 4 cm along the boundaries 14 of the third recess 7 to the upper end of the recess 7 to the position of the bolt 10 shown in Fig. 3. Therefore, it exists a defined threshold of the force F for the movement of the bolt 10 in the third recess 7, which depends in the main on the grade of deformability of the straps and the difference between the diameter 12 of the bolt 10 and the breadth 13 of the third recess 7. The bolt 10 hits the end of the third recess 7 and its movement is stopped.

As a result, the distance between the bolt 10 and the first recess 5 with the belt 4 is enlarged and the risk of belt or webbing dumping during a crash is reduced. Furthermore, the braking of the vehicle occupant is softened. The retractor spool stops during an accident the rewinding of the belt 4 from the retractor spool for braking the vehicle occupant. This happens in stiff retractor spools without any small additional rewinding, as a consequence, the braking of the vehicle occupant is not soft. The movement of the bolt 10 in the third recess 7 gives some additional space for the vehicle occupant and the braking is softened. Not stiff retractor spools give some additional space for the vehicle occupant.

The guiding device 1 is made of metal and/or plastic. Normally the lower part with the first recess 5 is made of plastic and upper part in the vicinity of the third recess 7 with the straps 18 are made of metal, e. g. aluminum.

In an overall view, the seat belt restraint system 1 with the guiding device 1 has essential advantages. The risk of belt or webbing dumping is reduced. Stiff retractor spools are cheaper than not stiff retractor spools. The seat belt restraint system with the guiding device 1 offers a soft braking of the vehicle occupant as with the more expensive not stiff retractor spool. The guiding device 1 is easy and cheap to produce.

## Claims

1. Seat belt restraint system of a motor vehicle, with a belt (4) and a guiding device (1 ), especially a D-loop (2), comprising a first longitudinal recess (5) for guiding and/or redirecting the belt (4), means (9) for fixing the guiding device (1) to the frame (15) of the motor vehicle and a permanent or plastic, deformable part (19), which allows a longitudinal movement of the guiding device (1) relative to the frame (15), if the tensile forces in the belt (4) are greater than a defined threshold,
**characterized in that**
the maximum longitudinal movement of the guiding device (1) is greater than 1 cm, the guiding device (1) comprises a third recess (7), especially in the form of an elongated hole, which allows the longitudinal movement of the guiding device (1), the deformable part (19) is the part of the guiding device (1), which forms the boundaries (14) of the third recess (7), and
in the proximity of the third recess (7) at least one further recess (8), especially in the form of an elongated-hole, is located in the guiding device (1) in order to create the boundaries (14) of the third recess (7) higher deformable.

2. Seat belt restraint system according to claim 1,
**characterized in that**
the maximum longitudinal movement is greater than 2 cm.

3. Seat belt restraint system according to claim 1 or 2,
**characterized in that**
the means (9) for fixing the guiding device (1) to the frame (15) of the motor vehicle comprise a second recess (6) in the guiding device (1) for fixing a bolt (10) and a bolt (10), which is fixed in the second recess (6) and to the frame (15).

4. Seat belt restraint system according to claim 3,
**characterized in that**
the guiding device (1) is rotatable around the center (11) of the bolt (10), when the guiding device (1) is in a normal used position.

5. Seat belt restraint system according to claim 3 or 4,
**characterized in that**
the maximum longitudinal movement of the guiding device (10) is greater than the diameter (12) of the bolt (10).

6. Seat belt restraint system according to claim 1,
**characterized in that**
the bolt (10) is longitudinally moveable in the third recess.

7. Seat belt restraint system according to claim 6,
**characterized in that**
the second and third recesses (6, 7) are formed as one recess.

8. Seat belt restraint system according to claim 1 or 6,
**characterized in that**
the breadth (13) of the third recess (7) is smaller than the diameter (12) of the bolt (10).

9. Seat belt restraint system according to claim 1,
**characterized in that**
between the third recess (7) and the at least one further recess (8) at least one deformable strap (18) is formed.

10. Seat belt restraint system according to any of the preceding claims,
**characterized in that**
the guiding device (1), especially the deformable part (19), e. g. the at least one strap (18), is made of metal, especially iron, aluminum or alloys of iron or aluminum and/or plastic.

11. Motor vehicle,
**characterized in that**
the motor vehicle comprises a seat belt restraint system according to one or more of the claims 1 to 10.

## Patentansprüche

1. Sitzgurtrückhaltesystem eines Kraftfahrzeugs mit einem Gurt (4) und einer Führungsvorrichtung (1), insbesondere einer D-Schleife (2), umfassend eine erste längliche Aussparung (5) zum Führen und/oder Umlenken des Gurts (4), Mittel (9) zum Befestigen der Führungsvorrichtung (1) am Rahmen (15) des Kraftfahrzeugs und ein permanentes oder plastisches, verformbares Teil (19), das eine Längsbewegung der Führungsvorrichtung (1) im Verhältnis zum Rahmen (15) ermöglicht, wenn die Zugkräfte im Gurt (4) einen bestimmten Schwellwert überschreiten,
**dadurch gekennzeichnet, dass**
die maximale Längsbewegung der Führungsvorrichtung (1) größer als 1 cm ist, die Führungsvorrichtung (1) eine dritte Aussparung (7) umfasst, insbesondere in Form eines länglichen Loches, die die Längsbewegung der Führungsvorrichtung (1) ermöglicht, das verformbare Teil (19) jener Teil der Führungsvorrichtung (1) ist, der die Grenzen (14) der dritten Aussparung (7) bildet, und
in der Nähe der dritten Aussparung (7) mindestens eine weitere Aussparung (8), vor allem in Form eines länglichen Loches, in der Führungsvorrichtung (1) angeordnet ist, um die Grenzen (14) der dritten Vertiefung (7) stärker verformbar zu machen.

2. Sitzgurtrückhaltesystem gemäß Anspruch 1,
**dadurch gekennzeichnet, dass**
die maximale Längsbewegung größer als 2 cm ist.

3. Sitzgurtrückhaltesystem gemäß Anspruch 1 oder 2,
**dadurch gekennzeichnet, dass**
die Mittel (9) zum Befestigen der Führungsvorrichtung (1) am Rahmen (15) des Kraftfahrzeugs eine zweite Aussparung (6) in der Führungsvorrichtung (1) zum Befestigen eines Bolzens (10) und einen Bolzen (10) umfassen, der in der zweiten Aussparung (6) und am Rahmen (15) befestigt ist.

4. Sitzgurtrückhaltesystem gemäß Anspruch 3,
**dadurch gekennzeichnet, dass**
die Führungsvorrichtung (1) um die Mitte (11) des Bolzens (10) drehbar ist, wenn sich die Führungsvorrichtung (1) in einer normalen Nutzungsstellung befindet.

5. Sitzgurtrückhaltesystem gemäß Anspruch 3 oder 4,
**dadurch gekennzeichnet, dass**
die maximale Längsbewegung der Führungsvorrichtung (10) größer ist als der Durchmesser (12) des Bolzens (10).

6. Sitzgurtrückhaltesystem gemäß Anspruch 1,
**dadurch gekennzeichnet, dass**
der Bolzen (10) in der dritten Aussparung in Längsrichtung beweglich ist.

7. Sitzgurtrückhaltesystem gemäß Anspruch 6,
**dadurch gekennzeichnet, dass**
die zweite und die dritte Aussparung (6, 7) als eine einzige Aussparung ausgebildet sind.

8. Sitzgurtrückhaltesystem gemäß Anspruch 1 oder 6,
**dadurch gekennzeichnet, dass**
die Breite (13) der dritten Aussparung (7) kleiner ist als der Durchmesser (12) des Bolzens (10).

9. Sitzgurtrückhaltesystem gemäß Anspruch 1,
**dadurch gekennzeichnet, dass**,
zwischen der dritten Aussparung (7) und der mindestens einen weiteren Aussparung (8) mindestens ein verformbares Band (18) gebildet ist.

10. Sitzgurtrückhaltesystem gemäß einem der vorangehenden Ansprüche,
**dadurch gekennzeichnet, dass**
die Führungsvorrichtung (1), insbesondere das verformbare Teil (19), z. B. das mindestens eine Band (18), aus Metall gefertigt ist, insbesondere aus Eisen, Aluminium oder Legierungen aus Eisen oder Aluminium und/oder Kunststoff.

11. Kraftfahrzeug,
**dadurch gekennzeichnet, dass**
das Kraftfahrzeug ein Sitzgurtrückhaltesystem gemäß einem oder mehrerer der Ansprüche 1 bis 10 umfasst.

## Revendications

1. Système de retenue de ceinture de sécurité d'un véhicule à moteur, avec une courroie (4) et un dispositif de guidage (1), en particulier une boucle D (2), comprenant un premier renfoncement longitudinal (5) pour guider et/ou rediriger la courroie (4), un moyen (9) de fixation du dispositif de guidage (1) sur le cadre (15) du véhicule à moteur et une partie déformable (19) permanente ou en plastique, qui permet un mouvement longitudinal du dispositif de guidage (1) relative au cadre (15), si les forces de traction dans la courroie (4) sont supérieures à un seuil défini,
**caractérisé en ce que**
le mouvement longitudinal maximum du dispositif de guidage (1) est supérieur à 1 cm, le dispositif de guidage (1) comprend un troisième renfoncement (7), en particulier de la forme d'un trou allongé, qui permet le mouvement longitudinal du dispositif de guidage (1), la partie déformable (19) est la partie du dispositif de guidage (1), qui forme les limites (14) du troisième renfoncement (7), et
dans les environs du troisième renfoncement (7) au moins un autre renfoncement (8), en particulier de la forme d'un trou allongé, se trouve dans le dispositif de guidage (1) afin de créer les limites (14) du troisième renfoncement (7) encore plus déformable.

2. Système de retenue de ceinture de sécurité selon la revendication 1,
**caractérisé en ce que**
le mouvement longitudinal maximum est supérieur à 2 cm.

3. Système de retenue de ceinture de sécurité selon la revendication 1 ou 2,
**caractérisé en ce que**
le moyen (9) pour fixer le dispositif de guidage (1) au cadre (15) du véhicule à moteur comprend un deuxième renfoncement (6) dans le dispositif de guidage (1) pour fixer un boulon (10) et un boulon (10), qui est fixé dans le deuxième renfoncement (6) et au cadre (15).

4. Système de retenue de ceinture de sécurité selon la revendication 3,
**caractérisé en ce que**
le dispositif de guidage (1) est rotatif autour du centre (11) du boulon (10), lorsque le dispositif de guidage (1) est dans une position d'utilisation normale.

5. Système de retenue de ceinture de sécurité selon la revendication 3 ou 4,
**caractérisé en ce que**
le mouvement longitudinal maximum du dispositif de guidage (10) est supérieur au diamètre (12) du boulon (10).

6. Système de retenue de ceinture de sécurité selon la revendication 1,
**caractérisé en ce que**
le boulon (10) est longitudinalement déplaçable dans le troisième renfoncement.

7. Système de retenue de ceinture de sécurité selon la revendication 6,
**caractérisé en ce que**
les deuxième et troisième renfoncements (6, 7) forment comme un renfoncement.

8. Système de retenue de ceinture de sécurité selon la revendication 1 ou 6,
**caractérisé en ce que**
la largeur (13) du troisième renfoncement (7) est inférieure au diamètre (12) du boulon (10)..

9. Système de retenue de ceinture de sécurité selon la revendication 1,
**caractérisé en ce que**
entre le troisième renfoncement (7) et au moins un autre renfoncement (8) au moins une bande déformable (18) est formée.

10. Système de retenue de ceinture de sécurité selon l'une des revendications précédentes,
**caractérisé en ce que**
le dispositif de guidage (1) en particulier la partie déformable (19), par ex. au moins une bande (18), est faite en métal, en particulier du fer, de l'aluminium ou un alliage de fer ou d'aluminium et/ou en plastique.

11. Véhicule à moteur,
**caractérisé en ce que**
le véhicule à moteur comprend un système de retenue de ceinture de sécurité selon une ou plusieurs des revendications 1 à 10.
